# Europäisches Patentamt
# European Patent Office
# Office européen des brevets

(11) Publication number: **0 037 799**
**B1**

(12) **EUROPEAN PATENT SPECIFICATION**

(45) Date of publication of patent specification: **11.02.87**

(21) Application number: **81810129.7**

(22) Date of filing: **31.03.81**

(51) Int. Cl.⁴: **C 03 B 9/44,** C 03 B 9/38, C 03 B 9/16, C 03 B 35/06

(54) **Pusher for removal of objects from an in-line sectional production machine.**

(30) Priority: **09.04.80 CH 2710/80**

(43) Date of publication of application:
**14.10.81 Bulletin 81/41**

(45) Publication of the grant of the patent:
**11.02.87 Bulletin 87/07**

(84) Designated Contracting States:
**DE FR GB IT SE**

(56) References cited:
**FR-A-2 193 792**
**US-A-1 911 119**
**US-A-1 921 390**
**US-A-3 318 433**
**US-A-3 510 288**

(73) Proprietor: **Peter, Fritz**
**Lüssweg 15**
**CH-8542 Wiesendangen (CH)**
(73) Proprietor: **Murialdo, Gastone**
**Gaggio di Bioggio**
**CH-6981 Vernate (CH)**

(72) Inventor: **Peter, Fritz**
**Lüssweg 15**
**CH-8542 Wiesendangen (CH)**
Inventor: **Murialdo, Gastone**
**Gaggio di Bioggio**
**CH-6981 Vernate (CH)**

EP 0 037 799 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of Invention

The invention relates to the transfer of objects produced on a sectional machine, such as a thermoforming machine.

Background

Many production machines in use today, in particular glass containers forming machines are constituted by a plurality of identical sections, typically 4 to 10 sections, arranged in a straight line. Each section can be considered as an independent forming machine whereby only the timing relationship between the different sections is controlled by a common drive and timing system. The forming process is completed when a pair of tongs lifts the finished object out of the forming mold and swings it forward in front of the machine section where finally the tongs open releasing the object. In order to remove the formed objects from the forming area, a conveyor is mounted in front of the sections, the direction of travel of its belt being at a right angle relative to the axis of the forming sections.

Before the next formed object is swung forward by the tongs, the previous object is pushed onto the conveyor belt which is continuously moving and carries the object away. In former conveyors this action was provided by an arm mounted on a pivot and actuated by a cam. The arm carrying at its end a finger shaped to suit the contour of the object was swinging a short arc of circle, typically 25° to 35°, thereby gently pushing the object onto the conveyor belt. The cams actuating the pusher are secured on a common shaft mounted along the length of the conveyor. The time required by the shaft to make a full revolution correspond to the cycle time of each forming section. Thereby by securing the cams in a position relative to each other corresponding to the timing sequence of the sections each pusher maintains an equal time relationship to its respective machine section.

The conveyor camshaft is driven by the same drive system that drives the timers of the sections thus ensuring synchronous speed. A mechanical or electrical differential enables to advance or retard the position of the camshaft relative to the machine sections thereby providing a means to adjust the dwell time during which the objects are resting on the cooling plate before being pushed onto the conveyor belt. By properly selecting the timing sequence of the forming sections and of the pusher cams, and with an appropriate belt speed the objects will be placed in an equally spaced row on the conveyor belt.

It is common practice nowadays to produce several identical objects at one time in one single forming cycle. This is accomplished by feeding simultaneously a plurality of identical forming molds, typically 2 to 4, mounted in line in the same section. In this case every forming section is releasing simultaneously a plurality of objects which are located by the tongs onto the cooling plate aligned on an axis at a right angle relative to the belt travel. It is a requirement that, in order to facilitate the further operations downstream of the forming area, such as transferring, stacking or others, the objects are aligned along a straight line and evenly spaced. Therefore, the simple pusher arm as described above is not satisfactory when multiple mold production is performed.

So, it has become common practice to use a different pushout device, called 90° pusher. The same basic system of camshaft and cams actuate, on every section, an intermediate arm which, by means of a lever and a chain or a link imparts a rotation of 90° to the pusher unit. The pusher unit, which is enabled to rotate around a vertical axis, carries on its top a horizontally mounted pneumatic cylinder whose mobile portion, be it the piston or the cylinder itself, carries at its end the pusher fingers. The working sequence is as follows: in its initial position the pusher is pointing towards the objects on the cooling plate, the axis of the pneumatic cylinder being parallel to the direction of the belt travel. In this position compressed air is ported to the cylinder whose mobile part extends until its fingers are in contact with the standing objects. At this point the cam imparts a rotation to the pusher unit which is gradually accelerated. When the pusher has accomplished 90° of rotation, i.e. when the axis of the pusher cylinder is at a right angle to the axis of the conveyor belt and the various objects are positioned on a straight line parallel to the direction of belt travel, another port opens and leads compressed air to reverse the action of the pneumatic cylinder. The mobile portion of the cylinder retracts and avoids any interference of the pusher fingers with the objects which meanwhile are carried away by the conveyor belt. With the pneumatic cylinder still retracted the pusher swings back by 90° and it is ready to start another cycle as just described. The 90° pusher has the advantage over the simple pusher arm that all the objects are pushed on a single row parallel to the direction of belt travel. Furthermore, during the return movement the pneumatic cylinder and its fingers are kept retracted avoiding any interference with the newly formed objects which meanwhile have been deposited onto the cooling plate.

This feature avoids the need to make a time allowance for the pusher to complete its cycle and return to rest before the next set of objects is released on the cooling plate, i.e. as soon as the previous set of objects clears the cooling plate the next set can be released on it. This enables to keep the objects longer on the cooling plate, thus providing more cooling which in turn enables to attempt faster production rates. Of course, also with multiple mold production there is a need to obtain an evenly spaced row of objects on the conveyor belt. With the 90° pusher this is achieved by locating the fingers on the pusher arm at a distance between each other which correspond to the belt spacing in single mold production divided by the number of molds. In this way a row of uniformly spaced objects is obtained. A pushout device of this type is described in US—A—3,510,288 issued May 5, 1970 to George E. Rowe.

The above describes the state of the art in transfer mechanism design. The operation of the state of the art conveyor is still a source of numerous problems which are enlisted in the following.

1. The 90° pusher is limited in the precision of positioning and operational speed by weaknesses inherent to its very principle. Ideally, the pusher arm should accelerate in such a manner that the pusher fingers push the objects, at the instant they clear the fingers and are carried away by the belt, at a peripheral speed matching the speed of the belt. However, virtually at the same point in time, the rotational movement must come to standstill in order to allow the fingers to retract. The deceleration requires a certain time and displacement. If the deceleration phase is started before the 90° rotation is completed, then the peripheral speed at the instance when the objects clear the fingers is not anymore equal to the belt speed. The set of objects will tend to be positioned on the belt along an inclined axis, the front one (in the direction of belt travel) being pushed further away than the rear one. If the deceleration path is maintained over the right angle position, i.e. if the pusher is allowed to turn over 90°, then again a staggered line of objects will result, this time the rear object being pushed further away. In addition, the pneumatic stroke, albeit cushioned, provokes at the end of each stroke a jerk which can cause an unstable object to tilt.

2. The equal spacing of the objects is dependent on the accuracy of the cams position on the camshaft. The higher the number of sections in operation, the higher the belt speed and consequently a given inaccuracy in the position of the cams will result in a greater spacing error. With the operation of 8- and 10-sections units this becomes a serious problem.

3. In order to suit the different types and sizes of production machines with different numbers of molds per section and different centredistances between the molds, various versions of transfer mechanisms are in use with different dimensions. This is a disadvantage for both the manufacturer and the user of the equipment because it reduces interchangeability, increases inventories and makes the maintenance more complicated.

4. Depending on the location of the production unit in the manufacturing plant the conveyor belt may move either to right or to the left direction. The present design of the pusher makes it necessary to have a number of components which are specifically constructed for either right or left hand direction of delivery. This is a disadvantage for both manufacturer and user of the equipment because it reduces flexibility, it makes scheduling of production more difficult and increases inventories.

5. The present design of the 90° pusher does not enable to cover or otherwise protect the area around the pusher itself. Tilted objects are bound to fall underneath with the risk of jamming the moving parts, causing disruption of operation and damage to the equipment.

US—A—3,318,433 issued May 9, 1967 to Gorge E. Rowe describes another type of pusher device. The pusher device described in this Patent comprises a head mounted on a vertical axis which turns continuously and uniformly through 360°. By means of a cam mounted concentrically to the rotation axis of said head, and a cam lever the pusher fingers are caused to move in an essentially linear movement relative to the rotating head. The pusher fingers extend to engage with the objects on the cooling plate and retract after the head has turned through 90° and the objects are on the conveyor belt. In order to clear the fingers from the objects during the retraction movement, a second cam through a system of levers causes the fingers to be delayed in their rotation relative to the rotation of the head.

Summary of the Invention

In order to overcome the problems listed above, the invention provides apparatuses are provided as defined in claims 1 and 10.

The invention provides an improved push-out device used in multiple section in-line production machines, such as e.g. thermoforming machines used to produce glass containers.

A preferred embodiment of the invention has the following features:

1. A pusher constituted by a pusher arm which swings around a pivot, the latter also moving along a circular path. A control box powers and controls the motion of both moving components mentioned. With an appropriate control of the relative motion of the pivot and of the arm the pusher fingers are caused to describe a motion appropriate for pushing the objects from the cooling plate onto the moving conveyor belt. At first the pusher fingers move in an almost linear path towards the objects standing on the cooling plate so that the pusher fingers are inserted between the standing objects without touching them. Then both pivot and arm swing out pushing the objects onto the conveyor belt. When an angle of approximately 90° is reached and the set of objects is parallel to the direction of belt travel the peripheral speed of the pusher fingers matches the speed of the conveyor belt. From this moment the pusher arm is kept at a constant angle relative to the conveyor belt while the pivot continues its movement along a circular path. At first the peripheral speed of the fingers is essentially in the direction of the belt travel, but as the pivot proceeds along its circular path the speed component in the direction of the belt axis decreases and the speed component transverse to the belt axis increases, retracting the fingers away from the objects which meanwhile are transported by the conveyor belt. When the fingers have cleared the objects the pusher arm is swung back and also the pivot initiates its return travel, the relative position of the two components being such as to prevent the pusher fingers from reaching over the conveyor belt and interfere with the passing row of objects. At some point during the return movement a clutch interrupts the action and the pusher remains at standstill until an impulse from the respective section starts the next pusher cycle.

2. The pusher as described in paragraph 1 above can be driven by a variable speed drive which can be independently powered or connected to the production machine drive, for instance the same motor driving the conveyor belt. The timing is performed by the clutch actuated from an impulse out of the timer controlling the respective section cycle. The impulse can be advanced or retarded as required in order to obtain an equally spaced row of objects on the conveyor belt.

3. An alternate method of providing the desired motion to the disc and to the pusher arm is to assign a separate power source for both of these elements and to govern the motion of each power source by a suitable controller (Process control by computer software).

4. The pusher mechanism can be converted from right hand operation to left hand operation and vice versa without a need to change parts, but simply by rearranging the mounting position of certain components. Only the pusher arm may be of a different type between right hand and left hand operation.

Drawings

In the following a preferred embodiment of the invention will be described in detail with reference to the accompanying drawings wherein:

FIG. 1 shows a perspective view of a 6-section fully assembled conveyor;

FIG. 2 shows a perspective view of two adjacent segments of conveyor partially disassembled to make visible details inside;

FIG. 3 shows a cross section of the pusher mechanism taken on line II—II of FIG. 2;

FIG. 4 shows a portion of view taken on line III—III of FIG. 4;

FIG. 5 shows a portion of view taken on line IV—IV of FIG. 4;

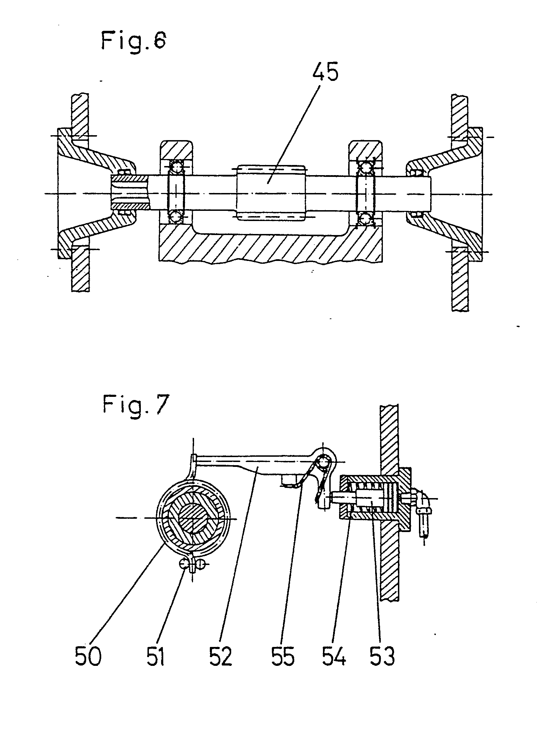

FIG. 6 shows a portion of cross section taken on line V—V of FIG. 4;

FIG. 7 shows a portion of view taken on line VI—VI of FIG. 4 and

FIG. 8 shows a section analogous to FIG. 4 taken on line II—II of FIG. 2.

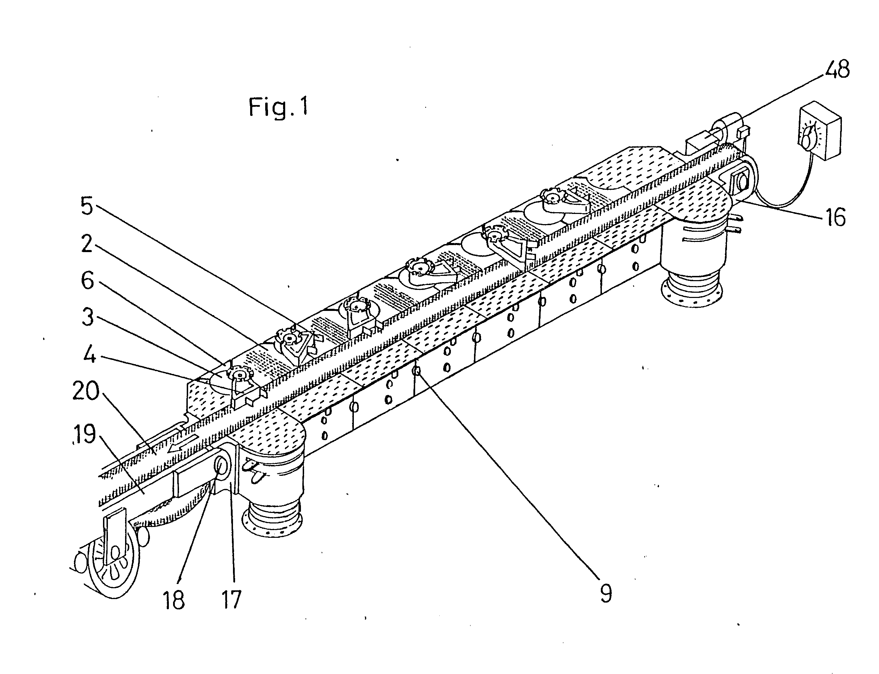

FIG. 1 shows a fully assembled conveyor suitable for operation with a 6-section machine. The direction of delivery is left hand. The conveyor is constituted by 6 identical segments, of which are visible in this view the cooling plate 2, the pusher disc 3, the pusher arm 4 with the pusher fingers 5 and the setting knob 9 for the adjustment of the swinging motion of the pusher arm 4.

Mounted on the supports there are, on the right side the end roll unit 16 and on the left side the conveyor extension connecting unit 17 which have a hinge 18 supporting the conveyor extension 19. The conveyor extension has the function to transport the objects as far as necessary away from the production machine and to drive the belt 20 at the correct speed. If the conveyor is for right hand delivery the belt end roll unit 16 is mounted on the left side and the conveyor extension connecting unit 17 is mounted on the right side.

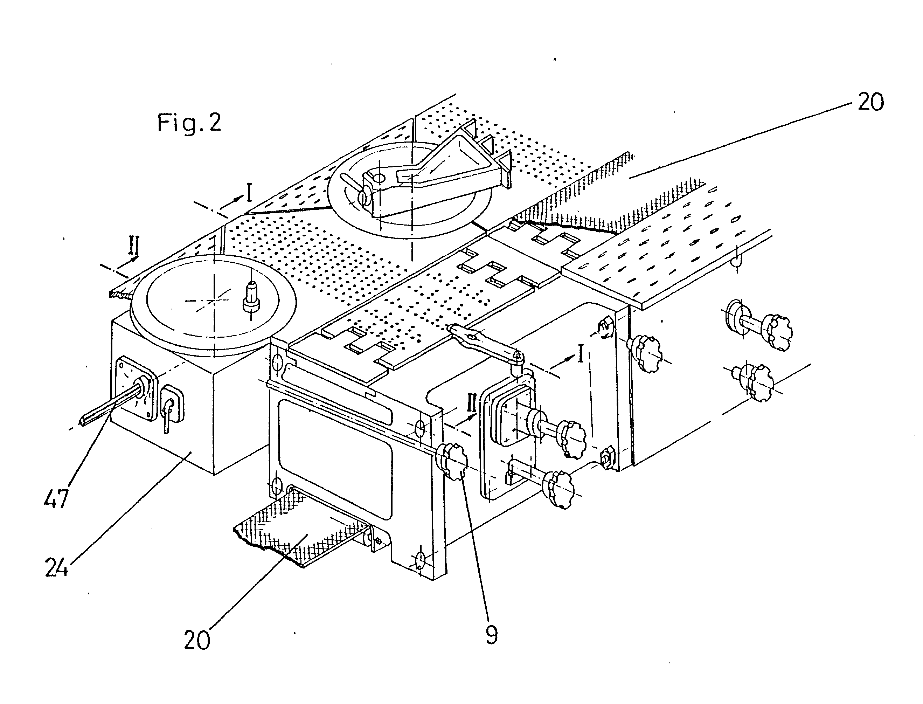

FIG. 2 shows the arrangement of various components. The pusher mechanism 24 is secured by screws or other fasteners between two adjacent segments.

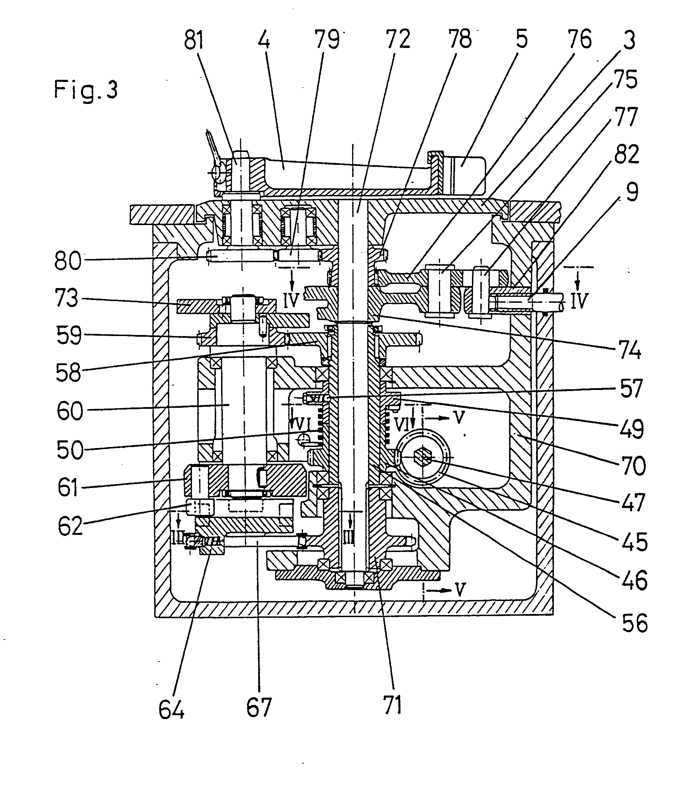

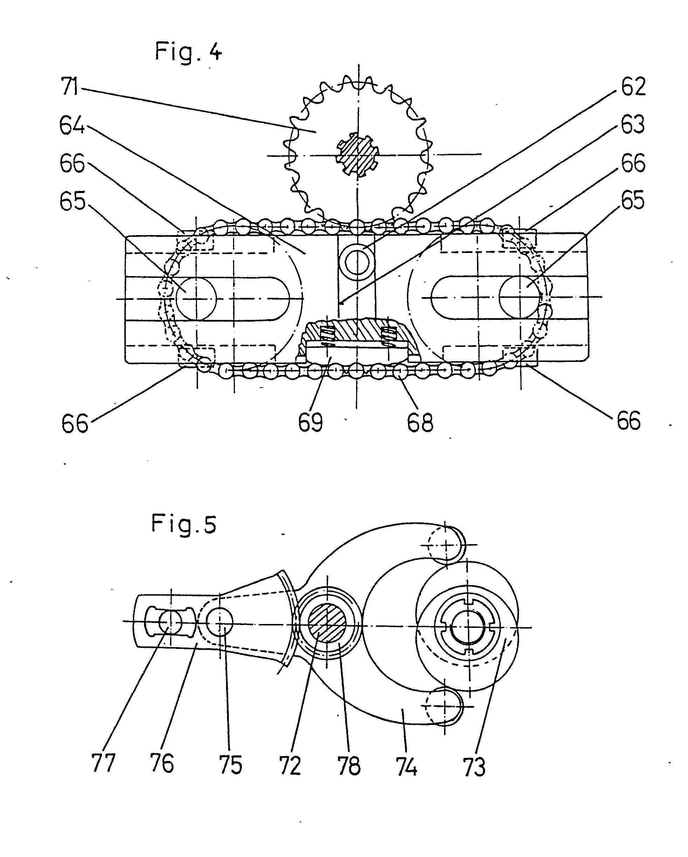

FIG. 3 shows a cross section thru the pusher mechanism 24. The input shaft 45 has a helical gear engaging with helical gear 46. A concentric, polygonal bore in shaft 45 is aligned with the corresponding bores of the other pusher mechanisms on the conveyor. The drive shaft 47, which consists of a polygonal rod extending along the entire length of the conveyor is inserted thru the said bores and coupled to the drive 48. The drive 48 is an infinitively variable drive e.g. a DC motor electronically controlled. By all means, when the conveyor is in operation, the drive shaft 47 must turn continuously, at a constant adjustable speed. The helical gear 46 has a cylindrical extension which aligns with a cylindrical extension of the same diameter on drive disc 49. The upper toe of spring 50 is secured to drive disc 49 by the two pins 51. The lower toe engages with the actuator arm 52. If the helical gear 46, which is continuously turning, tends to drive by friction the spring 50 the actuator arm causes the spring to expand, releasing the helical gear 46. When a timed air impulse from the respective section actuates the piston 53 the piston rod pushes the actuator arm 52 and causes it to disengage from the spring toe. The spring closes to its interference fit. The friction contracts the spring 50 so it grips the cylindrical extension of helical gear 46. In this way the drive disc is driven at the same speed as the helical gear 46. When the air impulse is interrupted the spring 54 pushes back the piston 53 enabling spring 55 to restore the original position of the actuator arm 52 which will engage again with the lower toe of spring 50 when the latter has performed one complete revolution. The drive disc 49 transmits the rotation to the primary shaft 56 thru the spring loaded overload ball 57 engaging in a notch in primary shaft 56. Since there is only one notch, the correct position will be restored after an overload occurs. Primary shaft 56 holds a gear 58 which meshes with gear 59 mounted on secondary shaft 60. Gears 58 & 59 have the same number of teeth, so that when primary shaft 56 completes 1 revolution also the secondary shaft 60 will have completed 1 revolution. The secondary shaft 60 carries a crank 61, whose roller 62 engages with the cross slot 63 in slider 64. As the crank 61 performs one revolution the slider 64 guided by vertically mounted bearings 65 and by horizontally mounted bearings 66 is forced by roller 62 to make a linear back and forth stroke. Slider 64 carries a roller chain 68 wrapped around the two sprockets 67. A spring loaded shoe 69 keeps the roller chain under tension. The shoe 69 is toothed to prevent the roller chain to slide over it. The shoe 69 can also be mounted in a fixed position on main bracket 70 instead of being mounted on the slider 64 as shown on FIG. 3 and 4. If mounted on the bracket 70, the show will keep the chain fixed relative to the bracket and the other side of the chain will make a stroke which is double the stroke of the slider 64.

The roller chain 68 engages tangentially with the sprocket 71. Sprocket 71 is caused to perform an oscillation. This movement is transmitted by an internal spline engaging with the splined portion of shaft 72 which in turn carries the disc 3. The secondary shaft 60 also carries the double cam 73 which actuates the lever 74. Lever 74 is centered around the shaft 72 and when the cam rotation causes the lever 74 to rock, the stud 75, supported on one extension of lever 74 moves along an arc of circle. Stud 75 carries gear sector 76 which is also guided by its slot engaging with pin 77. As the stud 75 moves and the pin 77 is fixed, the sector 76 is caused to rock around the axis of stud 75 and its toothed portion meshing with double gear 78 imparts a rotational movement to the same gear 78. The latter, via sun gear 79, transmits the movement to gear 80, mounted on pivot 81 which extends on top of disc 3 and carries the pusher arm 4. The pin 77 is mounted on the shifting bracket 82 which is adjusted to move nearer or farther from stud 75 thru the setting knob 9. Moving pin 77 nearer to stud 75 causes sector 76 to rock at a greater arc of circle, eventually causing pusher arm 4 to also make a greater arc of rotation. Moving pin 77 farther away from the stud 75 will result in the contrary effect.

In a system as described above, an air impulse from the respective machine section would start a pusher cycle in which the disc 3 osciiates over an arc of circle and the stud 81 would impart a swinging movement to the pusher arm 4. The two motions are compelled according to a definite law, dependent on the dimensions of the various components and in particular on the profile of cam 73, such as to generate at the pusher fingers 5 a path appropriate for a smooth transfer of the objects from the cooling plate onto the conveyor belt.

The setting knob 9 enables to increase or decrease the swinging motion of the pusher arm 4 around the axis of pivot 81, providing a control of the position of the objects on the conveyor belt.

It is a requirement that the pusher cycle is performed in a shorter time interval than it is required by the machine sections to complete their cycle. If this condition is fulfilled, the pusher mechanism will remain at rest with the clutch spring 50 engaged with the actuator arm 52 until the next impulse from the respective section starts the next cycle. Ideally the pusher cycle should take approximatively 80% of the section cycle, in order that the pusher mechanism is not compelled to move excessively fast. Another requirement is that the pusher fingers must reach a peripheral speed equal or near to equal to the speed of the conveyor belt. The speed of the conveyor belt, at a given sectional speed, may be considerably different depending on the type of machine. For instance a 8-section machine would require a conveyor with a belt moving twice as fast as the conveyor belt of a 4-section machine, always at the same sectional speed. If a pusher mechanism is functioning correctly on a 4-section conveyor, completing its cycle in 80% of the section cycle time, the same pusher, mounted on a 8-section conveyor would have to be set at double the previous speed in order to match the faster belt speed and would, therefore, complete its cycle in 40% of the section cycle time. In order to avoid this problem, means are available to modulate the rotational speed of the secondary shaft 60, with respect to the primary shaft 56.

The gears 58 and 59 can be round, elliptical or of any other shape as required, but always with the same number of teeth, so that they complete 1 revolution at the same time. Different sets of gears can be mounted depending on the belt speed requirement of the production machine. Another method of obtaining a similar effect is to move the shaped gears, e.g. elliptical gears, to a different meshing point at the cycle starting position. This would generate a different speed/position characteristic. For this purpose gear 58 is splined and gear 59 mounted on a plain seat and jammed by a nut in order to suit correctly any position of gear 58.

To convert a pusher mechanism from right hand to left hand operation or vice versa the following will be necessary: cam 73 is removed, shifted and reinstalled, the crank 61 is turned by 180° with the gear 58 and 59 out of mesh so that the starting position of roller 62 is the opposite to what it was before, and the shaft 72 is engaged in another position into the splines of sprocket 71, so that the pivot 81 is, at its starting point, in a mirror opposite position. No change of parts is required inside the pusher mechanism; the pusher arm and fingers may need to be of different type for right versus left hand operation. The above describes the pusher mechanism as shown on FIG. 3. Of course, the same sequence of motions can be obtained with different machine elements. For instance, to transmit the movement from slider 64 to shaft 72 instead of roller chain 68 and sprocket 71 a rack secured on slider 64 engaging with a gear centered on shaft 72 could be used. A toothed belt could substitute the chain. Also two strips of flexible material, e.g. spring steel, could be fastened at each end of slider 64 and be wrapped around and secured to a pulley mounted on shaft 72. Similarly, sector 76 could be substituted by a lever mounted on the same position, keeping a strip of flexible material at both ends under tension, the said strip turning around a pulley substituting gear 78. Again, to transmit the movement from the said pulley to pivot 81, the system of gears described above could be replaced by a system of roller chain and sprockets, or of toothed belt and pulleys, or flexible strip and pulley.

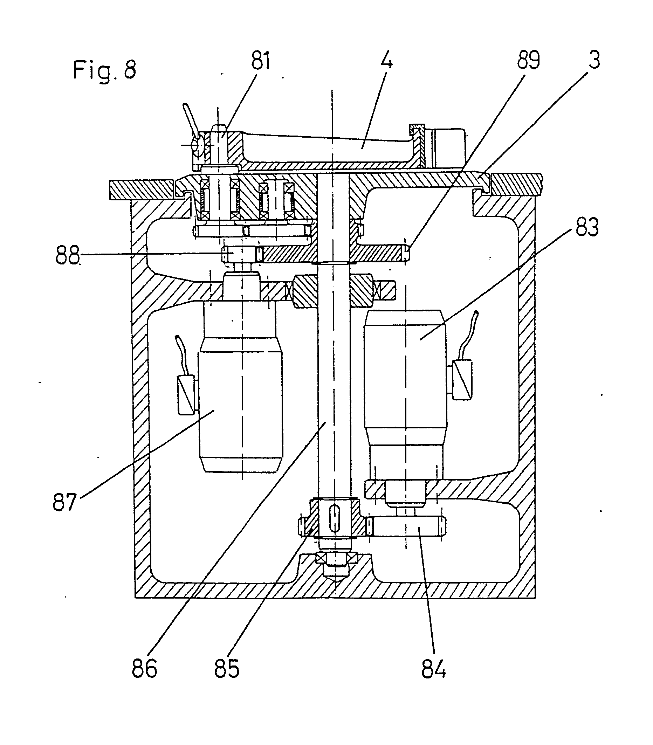

Interesting possibilities are offered by the use of electronic controllers to power and control a pusher mechanism based on the principle described above. FIG. 8 is showing a cross section of a pusher mechanism electronically driven and controlled. Ratiomotor 83 is driving, thru gear 84 and gear 85 the shaft 86 which carries the disc 3 with pivot 81 on which the pusher arm 4 is secured. Ratiomotor 87 drives thru its gear 88 the double gear 89. The movement is transmitted from double gear 89 to pivot 81 in the same manner described before. A suitable controller would drive the two ratiomotors 83 and 87 according to a definite displacement/time law such as to generate the correct path and speed at the pusher arm. The ratiomotors 83 and 87 could be step-motors or synchronous motors or any other type of motor able to follow precisely a definite displacement/time function. Some production machines are today timed by a minicomputer based controller. With such a device, the impulse stasrting the pusher cycle could be used internally to trigger a programmed subroutine which in turn would produce the current output required to drive the motors in the proper manner. In order to obtain different sequences of motion to suit different applications, e.g. different numbers of sections in use, only a change in software would be required.

Other production machines are timed by hardwired sequence controllers. In this case the current output required to drive the motors could be generated by a separate microprocessor based controller triggered from the main sequence controller timing the production machine.

The program could be stored in a memory such as a PROM. Different programs to suit different applications could be stored in separate exchangeable PROMs which would constitute, in fact, a sort of "electronic cam" producing the desired motion sequence at the pusher arm. Of course, such a controller could also be used with a mechanically or pneumatically timed machine, by means of a transducer converting the starting signal into an electric signal triggering the said microprocessor based controller.

**Claims**

1. Apparatus for transferring articles from a first position on one side of a moving conveyor (20) to a second position on said conveyor, characterised in that said apparatus comprises:

a disc (3) mounted on the said one side of said conveyor for rotational oscillation about a first axis (72);

an arm (4) mounted on said disc for rotation about a second axis spaced laterally from and parallel to said first axis, said disc and arm producing a sweeping motion; and drive means powered by a single drive shaft (47) for rotating both said disc and said arm about their respective axes, the locations of said axes relative to each other and the location of said first axis relative to said first and second positions in combination with the rotational speeds of said disc and arm being such as to cause said arm to engage articles at said first position, to transfer the thus engaged articles from said first position to said second position and to withdraw from the thus transferred articles in such a manner as to avoid interference of pusher fingers (5) provided on the arm (4) with articles moving on said conveyor, whereby at the time of arrival at said second position, said articles are caused by said arm to move in a direction and a speed matching the direction and speed of said conveyor.

2. The apparatus of claim 1 wherein said drive means make the said arm (4) perform a rotational oscillation.

3. The apparatus of either claims 1 or 2 wherein a plurality of sets of said discs (3) and arms (4) are arranged along the said one side of said conveyor, each set having associated therewith a drive means, and wherein said single drive shaft extends in a direction parallel to the direction of movement of said conveyor to power each of said drive means.

4. The apparatus of either claims 1 or 2 wherein said drive means include means for adjusting the speed of delivery of said articles onto said conveyor.

5. The apparatus of claim 2 wherein said drive means includes means for adjusting the arc in which said arm oscillates.

6. The apparatus of claim 2 wherein said drive means includes means for reversing the rotational oscillation of said disc and said arm in order to accommodate a change in direction of movement of said conveyor.

7. The apparatus of either claims 1 or 2 further comprising means for selectively disengaging said drive means from said drive shaft.

8. The apparatus of claim 1 wherein said drive means includes a rotating crank (61) arranged to impart a reciprocating linear stroke to a sliding element (64), said sliding element in turn being mechanically connected to a shaft (72) upon which said disc is attached and being operative to impart oscillating rotational movement to said shaft.

9. The apparatus of claim 1 wherein said drive means includes intermeshed gears, the shapes of which may be varied in order to achieve corresponding variations in the relative motions of said disc and arm.

10. Apparatus for transferring articles from a first position on one side of a moving conveyor to a second position on said conveyor, characterised in that said apparatus comprises:

a disc (3) mounted on the said one side of said conveyor for rotational oscillation about a first axis (72);

an arm (4) mounted on said disc for rotation about a second axis (81) spaced laterally from and parallel to said first axis, said disc and arm producing a sweeping motion; and

two separate power sources, one power source driving said disc and the other power source driving said arm about their respective axis, the location of said axes relative to each other and the location of said first axis relative to said first and second positions in combination with the rotational speeds of said disc and arm being such as to cause said arm to engage articles at said first position, to transfer the thus engaged articles from said first position to said second position, and to withdraw from the thus transferred articles in such a manner as to avoid interference of pusher fingers (5) provided on the arm (4) with articles moving on said conveyor, whereby at the time of arrival at said second position, said articles are caused by said arm to move in a direction and a speed matching the direction and speed of said conveyor.

11. Apparatus of claim 10, wherein the operation of said power sources is governed by a controller whereby the relative motions of said disc and arm can be varied.

**Revendications**

1. Dispositif pour le transfert d'objets d'un premier lieu à coté d'un ruban transporteur (20) en mouvement et un autre lieu sur ce même ruban transporteur, caractérisé en ce que ce dispositif comprend:
un disque (3) monté sur un coté du ruban transporteur, lequel disque accomplit une rotation oscillatoire autour d'un premier axe;
un bras (4), monté sur le disque (3) rotant autour d'un deuxième axe, lequel est parallèle et desaxé par rapport au premier;
un entraînement constitué par un seul arbre (47) actionnant les deux éléments disque et bras autour de leurs axes respectifs, la position relative des axes entre eux er leur position par rapport aux lieux en combinaison aves les vitesses de rotation du disque et du bras étant telles à produire un mouvement du bras apte à s'engager avec les objets sur le premier lieu, de pousser les objets du premier lieu au deuxième lieu, et de se retirer des objets ainsi transferés de manière telle à éviter toute interférence entre les doigts poussoirs (5) montés sur le bras (4) et les objets se déplacant sur le ruban transporteur, ou à l'instant de l'arrivée sur le deuxième lieu, les objets sont mus en direction et vitesse corréspondantes à la vitesse et direction du ruban transporteur.

2. Dispositif suivant la revendication 1, caractérisé en ce que lesdits éléments d'entraînement impriment au bras (4) une rotation oscillante.

3. Dispositif suivant la revendication 1 ou 2, où une pluralité de disques (3) et bras (4) sont placés le long d'un coté d'un ruban transporteur, ou chaque jeu de disque et bras est muni d'une unité d'entraînement, et chaque unité d'entraînée est entraînée par un arbre d'entraînement commun dont l'axe est parallèle à la direction du ruban transporteur.

4. Dispositif suivant la revendication 1, où par le système d'entraînement la vitesse de transfer des objets sur le ruban transporteur peut être variée.

5. Dispositif suivant la revendication 2, où l'unité d'entraînement permet de varier l'amplitude de l'arc de cercle le long duquel le bras oscille.

6. Dispositif suivant la revendication 2, où l'unité d'entraînement comprends des moyens qui permettent d'invertir l'oscillation rotative du disque et du bras pour corréspondre à une direction de mouvement du ruban transporteur opposée.

7. Dispositif suivant la revendication 1 ou 2, comprenant en plus des moyens pour desaccoupler selectivement la dite unité d'entraînement de l'arbre d'entraînement.

8. Dispositif suivant la revendication 1, où l'unité d'entraînement comprend une manivelle rotante (61) qui imprime un mouvement linéaire de va-et-viens à un sabot (64), ledit sabot à son tour étant relié mécaniquement à un arbre (72) solidaire avec ledit disque qui reçoit ainsi un mouvement oscillatoire.

9. Dispositive suivant la revendication 1, où l'unité d'entraînement comprend un couple d'engrenages (58, 59) le contour desquels peut être tel à obtenir des variation dans les mouvements relatifs dedits disques et bras.

10. Dispositif pour le transfert d'objets d'un premier lieu à coté d'un ruban transporteur en mouvement et un autre lieu sur le même ruban transporteur, caractérisé en ce que ce dispositif comprend:
un disque (3) monté sur un coté du ruban transporteur, lequel disque accomplit une rotation oscillatoire autour d'un premier axe;
un bras (4), monté sur le disque (3) rotant autour d'un deuxième axe, lequel est parallèle et desaxé par rapport au premier;
deux unités d'entraînement séparées (83, 84), ou une des unité entraîne le disque (3) et l'autre le bras (4) autour de leurs axes respectifs, la position relative des axes entre eux et leur position par rapport aux lieux en combinaison avec la vitesse de rotation du disque et du bras étant telles à produire un mouvement du bras apte à s'engager avec les objets sur le premier lieu, de pousser les objets du premier lieu au deuxième lieu, et de se retirer des objets ainsi transferés de manière telle à éviter toute interférence entre les doigts poussoirs (5) montés sur le bras (4) et les objets se déplacant sur le ruban transporteur, ou à l'instant de l'arrivée sur le deuxième lieu, les objets sont mus en direction et vitesse corréspondantes à la vitesse et direction du ruban transporteur.

11. Dispositif suivant la revendication 10, où le déroulement des mouvements des unitées d'entraînement est maîtrisé par une unité de commande et où les mouvement relatifs du disque (3) et du bras (4) peuvent être variés.

**Patentansprüche**

1. Vorrichtung zum Verschieben von Gegenständen von einer Position auf einer Seite eines Transportbandes (20) zu einer zweiten Position auf dem Transportband wobei in der Vorrichtung enthalten sind:
eine Scheibe (3) montiert auf einer Seite des Transportbandes und hin- und herdrehbar um eine erste Achse;
ein Arm (4) montiert auf der Scheibe (3) drehbar um eine zweite Achse, welche parallel und versetzt zur ersten Achse angeordnet ist, wobei besagte Scheibe und Arm einen kontinuierlichen Bewegungsablauf erzeugen; und

ein Antrieb von einer einzigen Antriebswelle (47) zum Drehen der beiden besagten Elemente Scheibe und Arm um deren eigene Achsen, wobei der Ort deren Achsen relativ zueinander und der Ort der ersten Achse relativ zur ersten und zweiten Position in Verbindung mit den Drehgeschwindigkeiten der Scheibe und dem Arm derart sind, dass der Arm Gegenstände auf der ersten Position erfasst, diese so erfassten Gegenstaände von der ersten zu der zweiten Position verschiebt, und sich unter Vermeidung von Interferenz der am Arm (4) sich befindlichen Stösselfinger (5) mit den auf dem Transportband sich schon befindlichen Gegenständen, von den eben verschobenen Gegenständen zurückzieht, wobei zur Ankunftszeit bei der zweiten Position, die Gegenstände durch den Arm in einer mit dem Transportband übereinstimenden Richtung und Geschwindigkeit bewegt werden.

2. Vorrichtung nach Patentanspruch 1, wobei die besagten Antriebselemente den Arm (4) in eine oszillierende Drehbewegung versetzten.

3. Vorrichtung nach Patentanspruch 1 oder 2, wobei eine Mehrzahl der Scheiben (3) und Arme (4) längs der einen Seite des Transportbandes angeordnet sind, wobei jeder solchen Einheit ein Getriebe zugeordnet ist und diese Getriebe durch eine gemeinsame Antriebswelle, welche parallel zum Transportband liegt, angetrieben werden.

4. Vorrichtung nach Patentanspruch 1 oder 2, wobei durch die Antriebseinrichtung die Uebergabegeschwindigkeit der Gegenstände auf das Transportband angepasst werden kann.

5. Vorrichtung nach Patentanspruch 2, wobei durch die Antriebseinrichtung der Bogen entlang welchem sich der Arm (4) bewegt angepasst werden kann.

6. Vorrichtung nach Patentanspruch 2, wobei durch die Antriebseinrichtung die oszillierende Drehbewegung von Scheibe (3) und Arm (4) reversiert werden können um einer entgegengesetzten Laufrichtung des Transportbandes zu entsprechen.

7. Vorrichtung nach Patentanspruch 1 oder 2, wobei die Antriebseinrichtungen selektiv von der Antriebswelle getrennt werden können.

8. Vorrichtung nach Patentanspruch 1, wobei in der Antriebseinrichtung ein rotierender Kurbeltrieb (61) welcher einem Schlitten (64) eine lineare Bewegung ererteilt und dieser Schlitten (64) mechanisch mit der Welle (72) verbunden ist und damit den Scheibe (3) in eine oszillierende Bewegung versetzt, enthalten sind.

9. Vorrichtung nach Patentanspruch 1, wobei die Antriebseinrichtung sich im Eingriff befindliche Zahnräder (58, 59) aufweist und wobei die Umfangsform dieser Zahnräder entsprechend der gewünschten Bewegung der Scheibe (3) und des Arms (4) angepasst wird.

10. Vorrichtung zum Verschieben von Gegenständen von einer Position auf einer Seite eines Transportbandes (20) zu einer zweiten Position auf dem Transportband wobei in der Vorrichtung enthalten sind:

eine Scheibe (3) montiert auf einer Seite des Transportbandes und hin- und herdrehbar um eine erste Achse;

ein Arm (4) montiert auf der Scheibe (3) drehbar um eine zweite Achse, welche parallel und versetzt zur ersten Achse angeordnet ist, wobei die Scheibe und der Arm einen kontinuierlichen Bewegungsablauf erzeugen; und

zwei getrennte Antriebseinheiten (83, 84), wobei die eine Antriebseinheit die Scheibe (3) und die andere Antriebseinheit den Arm (4) um ihre respektiven Achsen antreibt, wobei die Anordnung der Achsen relativ zueinander und die Anordnung der ersten Achse relativ zur der ersten Position und relativ zu der zweiten Position im Zusammenhang mit den Drehgeschwindigkeiten der Scheibe und des Arms derart ist, dass·die Finger (5) des Arm (4) bei der ersten Position mit den zu verschiebenden Gegenständen in Kontakt kommen, diese Gegenstände zur zweiten Position verschiebt, derart dass die Gegenstände sich in ununterbrochener, kontinuierlichem Bewegungsablauf auf dem Transportband weiter bewegen und der Arm (4) mi den Fingern (5) sich bei der zweiten Position von den Gegenstaänden zurückzieht ohne dies weiter zu verschieben.

11. Vorrichtung nach Patentanspruch 10, wobei die Bewegungsabläufe der Antriebseinheiten dur eine Kontrolleinheit gesteuert werden und wobei die relativen Bewegungen der Scheibe (3) und des Arms (4) verändert werden können.

Fig.1

0 037 799

Fig. 2

20

47

24

20

9

0 037 799

2

Fig.3

## Fig. 4

## Fig. 5

Fig.6

45

Fig.7

50  51  52  55  54  53

Fig. 8